# EUROPÄISCHE PATENTSCHRIFT

(11) **EP 3 268 545 B1**
(45) Veröffentlichungstag und Bekanntmachung des Hinweises auf die Patenterteilung: **11.09.2019**
(21) Anmeldenummer: 16713289.3
(22) Anmeldetag: 07.03.2016
(51) Int. Cl.: E03C 1/02

(54) **SANITÄRARMATUR MIT ROSETTE**
TAP WITH ESCUTCHEON
ROBINET AVEC ROSACE

(30) Priorität: 09.03.2015 DE 102015002896
(43) Veröffentlichungstag der Anmeldung: 17.01.2018
(73) Patentinhaber: Grohe AG, 58675 Hemer (DE)
(72) Erfinder: PHILIPPS-LIEBICH, Hartwig, 58706 Menden (DE); LOI, Thomas, 58511 Lüdenscheid (DE); VOREL, Thomas, 59757 Arnsberg (DE)
(86) Internationale Anmeldenummer: PCT/EP2016/000411
(87) Internationale Veröffentlichungsnummer: WO 2016/142057

(56) Entgegenhaltungen:
- DE-A1-102013 003 823
- US-A1- 2010 200 077
- US-A1- 2013 312 856
- US-A1- 2014 197 343
- US-B1- 8 261 766

## Beschreibung

Die Erfindung betrifft eine Sanitärarmatur mit Rosette nach dem Oberbegriff des Patentanspruches 1.

Bei einer, an einer Gebäudewand unter Putz installierten Sanitärarmatur ist deren Unterputz-Baugruppe durch ein spritzwasserdichtes Rosettensystem verblendet. Das Rosettensystem kann mehrteilig mit einem sichtseitigen Dekorteil und einem, von dem Dekorteil überdeckten Befestigungsteil ausgeführt sein. Das Befestigungsteil des Rosettensystems ist unter Zwischenlage der Gebäudewand mit der Unterputz-Baugruppe verschraubbar. Ein solches gattungsgemäßes Rosettensystem ist aus der DE 102 19 471 B4 bekannt. Demzufolge ist das sichtseitige Dekorteil der Rosette am Außenumfang mit radial nach innen gerichteten Vorsprüngen versehen, die die Befestigungsplatte entgegen einer Federkraftwirkung untergreifen.

Eine einfache Montage bzw. Demontage der mehrteilig ausgeführten Rosettensystems ist von großer Relevanz. Zudem ist bei Verwendung von Montagewerkzeugen zu gewährleisten, dass es zu keiner Beschädigung des Dekorteils oder der angrenzenden Fließen- oder Wannenoberfläche kommt. Außerdem ist eine dauerhaft klapperfreie Halterung des Dekorteils am Befestigungsteil von Bedeutung.

Aus der US 2014/0197343 A1 ist eine gattungsgemäße Sanitärarmatur bekannt, bei der das Dekorteil über eine Bajonettverbindung mit dem Befestigungsteil in Form einer Unterlegplatte unter Zwischenlage einer Installationswand zusammengefügt ist. Hierzu ist am Dekorteil eine Riegelkontur angeformt, die mit einer korrespondierenden Gegenkontur an einem als Bajonettringelement ausgebildeten Riegelelement in Bajonettverbindung bringbar ist, sofern das Dekorteil in seine Verriegelungsstellung gedreht wird. Im Wesentlichen das Gleiche trifft auch auf aus der US 8 261 766 B1 bekannte Sanitärarmatur zu.

Die Aufgabe der Erfindung besteht darin, ein Rosettensystem für eine Sanitärarmatur, insbesondere Unterputz-Sanitärarmatur, bereitzustellen, bei der in einfacher Weise eine Montage/Demontage der Rosette mit handelsüblichem Werkzeug gewährleistet ist.

Die Aufgabe ist durch die Merkmale des Patentanspruches 1 gelöst. Bevorzugte Weiterbildungen sind in den Unteransprüchen offenbart.

Die Erfindung geht von der Problematik aus, dass im obigen Stand der Technik das Dekorteil und das Befestigungsteil mittels einer Schnappverbindung zusammengefügt sind. Zur Herstellung der Schnappverbindung wird das Dekorteil zunächst unter Aufbau einer Federkraft auf das Befestigungsteil gedrückt. Bei Erreichen der Endmontageposition schnappen die Schnapp-Vorsprünge des Dekorteils unter Abbau der Federkraft in korrespondierende Freiräume im Befestigungsteil ein. In Abgrenzung dazu sind erfindungsgemäß das Dekorteil und das Befestigungsteil nicht über eine Schnappverbindung, sondern vielmehr über eine Bajonettverbindung zusammengefügt. Bei der Bajonettverbindung ist ein Riegelelement in einer Betätigungsrichtung entlang des Rosettenumfangs zwischen einer Verriegelungsstellung und einer Entriegelungsstellung verstellbar. In der Verriegelungsstellung ist das Dekorteil am Befestigungsteil fest montiert. In der Entriegelungsstellung ist das Dekorteil noch lösbar am Befestigungsteil vorpositioniert, und zwar bereits in seiner Endmontageposition. Auf diese Weise wird ein im Vergleich zum Stand der Technik leichtgängiger Montagevorgang erzielt, bei dem Beschädigungen des Rosettensystems oder angrenzender Fliesen- oder Wannenoberflächen vermieden wird.

Erfindungsgemäß ist das Riegelelement ein vom Dekorteil und vom Befestigungsteil separates Bajonettringelement, das sichtgeschützt zwischen dem Dekorteil und dem Befestigungsteil angeordnet ist. Die Drehbetätigung des Bajonettringelementes ist somit bewegungsentkoppelt vom Dekorteil und vom Befestigungsteil. Entsprechend kann in der oben definierten Entriegelungsstellung das Dekorteil leichtgängig auf das Befestigungsteil bis in seine Endposition aufgesteckt werden. Erst anschließend wird durch Drehbetätigung des Bajonetringelementes das Dekorteil in seiner Endposition festgelegt.

In der Bajonettverbindung bilden das drehverstellbare Bajonettringelement sowie das wandmontierte Befestigungsteil Verbindungspartner. Hierzu kann das Bajonettringelement zumindest eine schlüssellochartige Aussparung aufweisen, die von einem am Befestigungsteil angeformten Bajonettzapfen durchsetzbar ist. In der Entriegelungsstellung ist der Bajonettzapfen mit seinem ausgeweiteten Zapfenkopf mit Bewegungsspiel durch einen querschnittsgroßen Teilbereich der schlüssellochförmigen Bajonettöffnung führbar, um das Dekorteil in seiner Endposition vorzupositionieren. In der Verriegelungsstellung kann dagegen der Zapfenkopf des Haltezapfens den Öffnungsrand eines querschnittskleinen Teilbereiches der Bajonettöffnung übergreifen, wodurch das Dekorteil in seiner Endposition festgelegt ist.

Das erfindungsgemäße Rosettensystem kann somit dreiteilig ausgeführt sein, und zwar mit voneinander separaten Dekor- und Befestigungsteilen sowie mit dem Bajonettringelement. Das Bajonettringelement kann jedoch im Hinblick auf eine Bauteilreduzierung zusammen mit dem Dekorteil eine Vormontageeinheit bilden, bei der das Bajonettringelement mit Bezug auf das Dekorteil drehgelagert ist. Das Dekorteil ist bevorzugt schalenförmig ausgeführt, und zwar mit einer, abgesehen von Durchgangsöffnungen für die Sanitärarmatur, geschlossenen kreisflächenförmigen Bodenfläche, die am Kreisumfang in eine umlaufende hochgezogene Randwand übergeht. Zur Drehlagerung des Bajonettringelementes kann die umlaufende Randwand des Dekorteils radial nach innen abragende Lagerstege aufweisen, die eine umfangsseitig am Bajonettringelement ausgebildete Gegenkontur mit geringfügigem Spiel umgreifen kann.

Wie oben erwähnt, ist lediglich das Bajonettringelement drehverstellbar, während das Dekorteil und das Befestigungsteil drehfest an der Installationswand montiert sind. Hierzu kann das Dekorteil eine Verdrehsicherung aufweisen, mittels der das Dekorteil drehfest und positionsgenau auf dem Befestigungsteil aufgesteckt ist. Beispielhaft kann eine Verdrehsicherungskontur in der umlaufenden Randwand des Dekorteils angeformt sein, die mit einer korrespondierenden Gegenkontur am Befestigungsteil in Formschluss bringbar ist.

Eine dauerhaft klapperfreie Halterung des wandinstallierten Rosettensystems ist von großer Bedeutung. Zudem ist auch bei Unebenheiten an der Installationswand (zum Beispiel ein Fliesenversatz in der Bautiefenrichtung) eine zuverlässige sowie einfache Rosetten-Montage zu gewährleisten. Vor diesem Hintergrund kann die Bajonettöffnung in einer Anlaufschräge des Bajonettringelementes ausgebildet sein, die mit Bezug auf eine Bajonettringelement-Drehebene mit einem Anlaufwinkel schräggestellt ist. Der Anlaufwinkel ist so ausgelegt, dass in der Entriegelungsstellung der Zapfenkopf des am Befestigungsteil angeformten Bajonettzapfens den Öffnungsrand der Bajonettöffnung um eine lichte Höhe überragt, das heißt der Zapfenkopf ist von dem Öffnungsrand der Bajonettöffnung beabstandet. Beim Verstellen des Bajonettringelementes von der Entriegelungsstellung in die Verriegelungsstellung wird dann der Zapfenkopf des Bajonettzapfens unter Aufbrauch der lichten Höhe in Anlage mit dem schräggestellten Öffnungsrandbereich der Bajonettöffnung gebracht und bevorzugt unter Aufbau einer Vorspannkraft weiter bis in die Verriegelungsstellung gedreht. Die Vorspannkraft ergibt sich aufgrund einer elastischen Verformung der Anlaufschräge und bewirkt, dass das Bajonettringelement zusammen mit dem Dekorteil mit der Vorspannkraft gegen das Befestigungsteil gezogen wird, wodurch ein weitgehend klapperfreies Rosettensystem bereitstellbar ist. Durch die in der Entriegelungsstellung vorgesehene lichte Höhe zwischen dem Zapfenkopf des Bajonettzapfens und dem Öffnungsrand der Bajonettöffnung kann ein Toleranzausgleich erfolgen, mit dem zum Beispiel Unebenheiten an der Gebäudewand (zum Beispiel der oben erwähnte Fliesenversatz in der Bautiefenrichtung) ausgleichbar ist.

Wie aus der Vorbeschreibung hervorgeht kann bevorzugt das Bajonettringelement sichtgeschützt innerhalb des Dekorteils angeordnet sein. Zur Drehbetätigung kann das Bajonettringelement einen Werkzeugansatz aufweisen, mit dem bei manuell vorgenommenem Werkzeugzugriff das Bajonettringelement zwischen der Ver- oder Entriegelungsstellung drehbetätigbar ist. Hierfür kann das Dekorteil speziell in seiner umfangsseitigen Randwand eine Werkzeug-Zugangsöffnung aufweisen, die radial nach außen in Flucht mit dem Werkzeugansatz am Bajonettringelement angeordnet ist.

Damit in der Verriegelungsstellung das Bajonettringelement zusammen mit dem Dekorteil unter Federvorspannkraft gegen das wandmontierte Befestigungsteil gezogen wird, ist es von Vorteil, wenn das Bajonettringelement aus einem, im Vergleich zum Dekorteil und zum Befestigungsteil elastisch nachgiebigen Material hergestellt ist.

Die vorstehend erläuterten und/oder in den Unteransprüchen wiedergegebenen, vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile sind nachfolgend anhand von Zeichnungen näher erläutert.

Es zeigen:
- Fig. 1, 1a und 2: jeweils unterschiedliche Ansichten einer an einer Gebäudewand installierten Unterputz-Sanitärarmatur;
- Fig. 3: in perspektivischer Alleinstellung ein Dekorteil eines insgesamt dreiteilig ausgeführten Rosettensystems;
- Fig. 4: in perspektivischer Alleinstellung ein Bajonettringelement des Rosettensystems;
- Fig. 5 und 6: jeweils unterschiedliche Ansichten des Rosettensystems, bei dem das Bajonettringelement in seiner Entriegelungsstellung ist;
- Fig. 7: in einer perspektivischen Teilschnittdarstellung das Rosettensystem, in dem das Bajonettringelement in seiner Verriegelungsstellung gezeigt ist; und
- Fig. 8: eine Vormontageeinheit bestehend aus dem Dekorteil und dem Bajonettringelement.

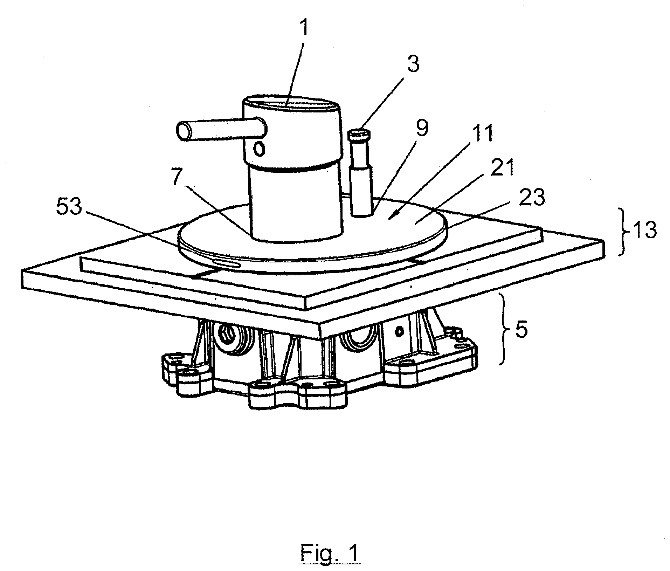

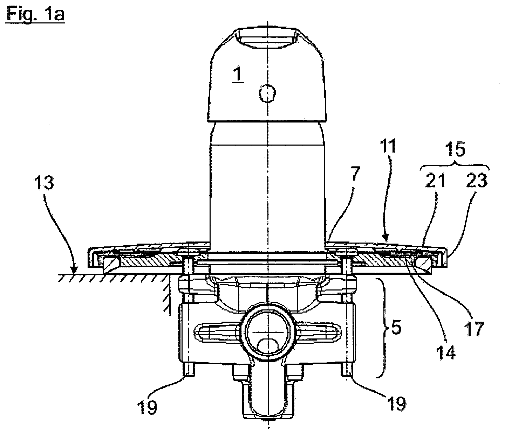

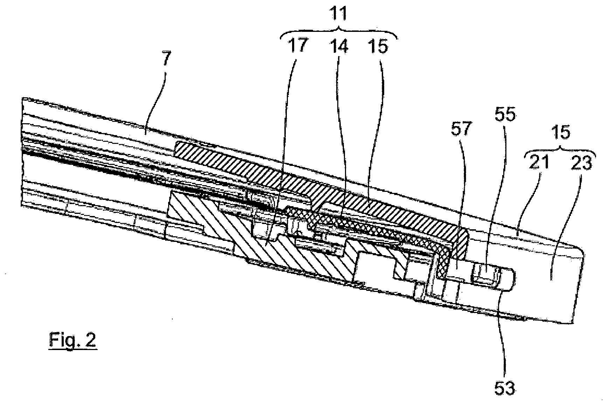

In der Fig. 1 ist eine Unterputz-Sanitärarmatur für zum Beispiel eine Badewanne dargestellt. Die Unterputz-Sanitärarmatur weist in der Fig. 1 ein erstes Bedienelement 1 zur Temperatur- und/oder Mengeneinstellung von Mischwasser sowie ein druckknopfartiges Bedienelement 3 zur Umstellung eines Wasserzulaufes auf. Die beiden Bedienelemente 1, 3 sind in an sich bekannter Weise mit einer Unterputz-Baugruppe 5 in Wirkverbindung, an der die Wasserein- und -ausläufe vorgesehen sind. Zudem sind die beiden Bedienelemente 1, 3 durch Durchführungsöffnungen 7, 9 einer Rosette 11 geführt, die spritzwasserdicht auf einer Installationswand 13 in Anlage ist. Die Rosette 11 ist gemäß der Fig. 2 insgesamt dreiteilig mit einem sichtseitigen Dekorteil 15, einem zwischengeordneten Bajonettringelement 14 sowie einem Befestigungsteil 17 ausgeführt. Wie in der Fig. 2 angedeutet ist, ist das Befestigungsteil 17 der Rosette 11 unter Zwischenlage der Installationswand 13 über angedeutete Befestigungsschrauben 19 mit der Unterputz-Baugruppe 5 verspannt. Das Dekorteil 15 ist beispielhaft aus einem Blechmaterial dünner Wandstärke oder einem Zinkdruckguss gefertigt, und zwar mit einem Boden 21, der mit Ausnahme der beiden Durchführungsöffnungen 7, 9 vollflächig geschlossen ist. Der kreisflächenförmige Boden 21 geht randseitig in eine davon hochgezogene umlaufende Randwand 23 über. In der Zusammenbaulage gemäß der Fig. 1 übergreift das schalenförmige Dekorteil 15 vollständig sichtgeschützt das aus einem elastischen Kunststoff-Weichmaterial hergestellte Bajonettringelement 14 sowie das aus einem Kunststoff-Hartmaterial hergestellte Befestigungsteil 17.

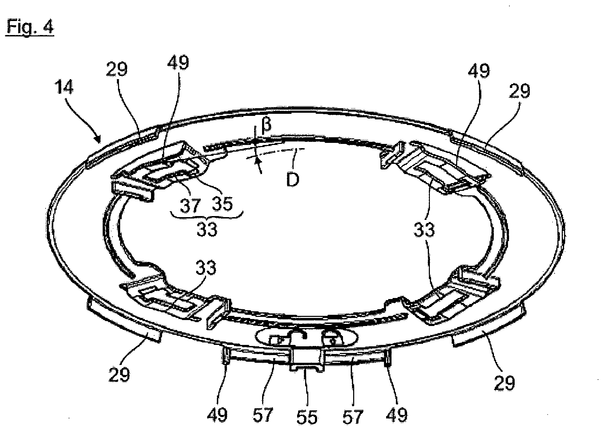

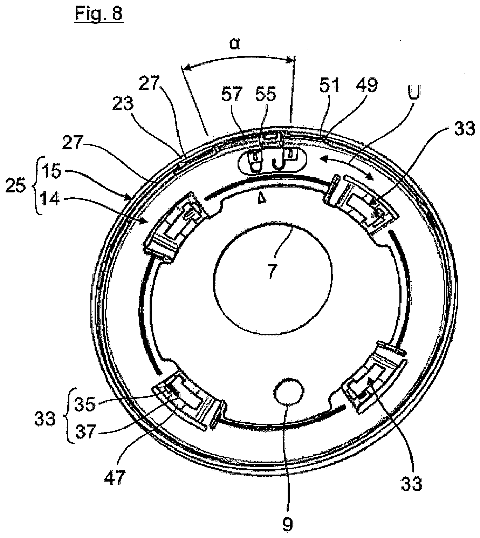

Gemäß der Fig. 8 kann das Dekorteil 15 und das Bajonettringelement 14 vor der Endmontage zu einer Vormontageeinheit 25 zusammenfügt werden. In der Vormontageeinheit 25 ist das Bajonettringelement 14 in einer Umfangsrichtung U drehgelagert. Hierzu weist das Dekorteil 15 an seiner umlaufenden Randwand 23 radial nach innen abragende Lagerstege 27 auf, die dazu korrespondierende Gegenkonturen 29 (zum Beispiel Fig. 4) am Außenumfang des Bajonettringelementes 14 mit geringfügigem Spiel umgreifen. Das Bajonettringelement 14 ist in der Fig. 8 um einen Drehwinkel α zwischen einer Verriegelungsstellung V und einer Entriegelungsstellung E verstellbar. In der Verriegelungsstellung V ist die in der Fig. 8 gezeigte Vormontageeinheit 25 unlösbar fest auf dem Befestigungsteil 17 montiert. In der Entriegelungsstellung E ist dagegen die Vormontageeinheit 25 vom Befestigungsteil 17 lösbar.

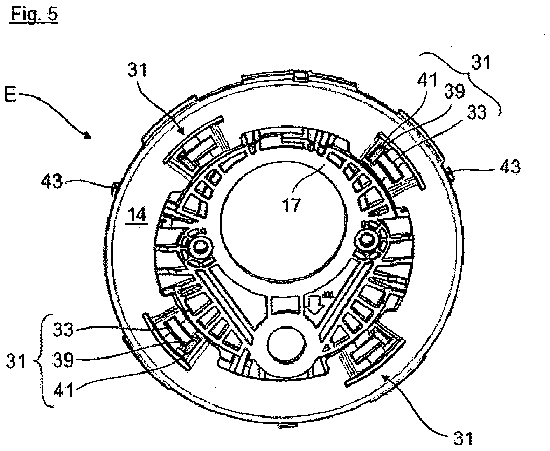

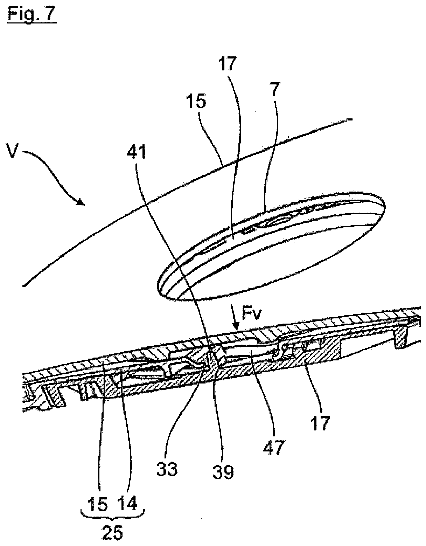

Erfindungsgemäß ist die Vormontageinheit 25 (über das Bajonettringelement 14) an insgesamt vier Bajonettverbindungsstellen 31 (Fig. 5) am Befestigungsteil 17 gehaltert. Nachfolgend ist beispielhaft der Aufbau einer dieser Bajonettverbindungsstellen 31 erläutert: So weist die Bajonettverbindungsstelle 31 eine schlüssellochartige Bajonettöffnung 33 auf, die mit einem querschnittsgroßen Teilbereich 35 und einem querschnittkleinen Teilbereich 37 ausgebildet ist. Die Bajonettöffnung 33 wirkt mit einem am Befestigungsteil 17 angeformten Bajonettzapfen 39 zusammen, wie es in den Fig. 5, 6 und 7 gezeigt ist. In der Fig. 5 ist das Bajonettringelement 14 in der Entriegelungsstellung E, in der der Bajonettzapfen 39 mit seinem ausgeweiteten Zapfenkopf 41 durch den querschnittsgroßen Teilbereich 35 der Bajonettöffnung 33 geführt ist. Demgegenüber ist in der Fig. 7 das Bajonettringelement 14 in seine Verriegelungsstellung V verstellt, in der der ausgeweitete Zapfenkopf 41 des Bajonettzapfens 39 den Öffnungsrand des querschnittskleinen Teilbereiches 37 der Bajonettöffnung 33 übergreift.

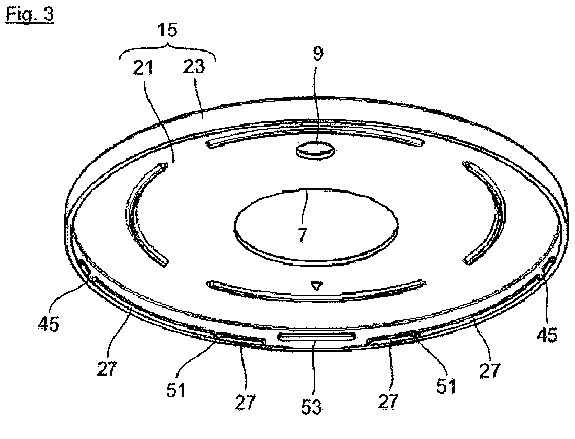

Im Unterschied zum drehbar gelagerten Bajonettringelement 14 ist das Befestigungsteil 17 und das Dekorteil 15 drehfest montiert. Hierzu ist zwischen dem Dekorteil 15 und dem Befestigungsteil 17 eine Verdrehsicherung vorgesehen, bei der radial außen am Befestigungsteil 17 ausgebildete Vorsprünge 43 (Fig. 5) formschlüssig in korrespondierende Ausnehmungen 45 (Fig. 3) im Lagersteg 27 des Dekorteils 15 eingreifen.

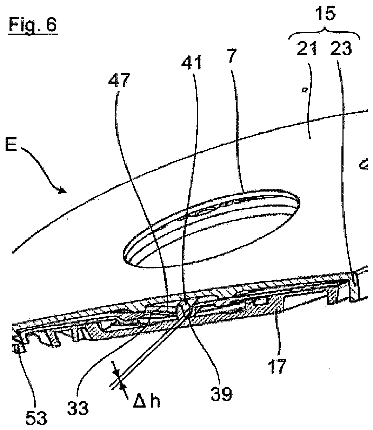

Wie aus der Fig. 4 weiter hervorgeht, ist jede der Bajonettöffnungen 33 in einer Anlaufschräge 47 des Bajonettringelementes 14 ausgebildet. Die Anlaufschräge 47 ist mit Bezug auf eine Bajonettringelement-Drehebene D (Fig. 4) mit einem Anlaufwinkel β schräggestellt. Der Anlaufwinkel β sowie die Umfangslänge der Anlaufschräge 47 sind so ausgelegt, dass in der Entriegelungsstellung E (Fig. 5 oder 6) der ausgeweitete Zapfenkopf 41 des am Befestigungsteil 17 angeformten Bajonettzapfens 39 den Öffnungsrand der Bajonettöffnung 33 um eine lichte Höhe Δh (Fig. 6) überragt. Beim Verstellen in die Verriegelungsstellung V (Fig. 7) wird der Zapfenkopf 41 des Bajonettzapfens 39 unter Aufbrauch dieser lichten Höhe Δh in Anlage mit dem schräggestellten Öffnungsrandbereich der Bajonettöffnung 33 gebracht, und zwar bevorzugt unter Aufbau einer Vorspannkraft Fᵥ (Fig. 7), mittels der die Vormontageeinheit 25 gegen das Befestigungsteil 17 gezogen wird.

Wie in der Fig. 8 angedeutet, ist das Bajonettringelement 14 um einen Drehwinkelbereich α von etwa zum Beispiel 13° drehverstellbar. Die Drehverstellung des Bajonettringelementes ist durch stiftförmige Anschlagelemente 49 (Fig. 4 oder Fig. 8) begrenzt. Die Anschlagelemente 49 sind elastisch nachgiebig ausgebildet. Bei Erreichen der Ver- oder Entriegelungsstellung V, E schnappt das jeweilige Anschlagelement 49 unter Abbau einer elastischen Rückstellkraft in eine korrespondierende Freisparung 51 im Lagersteg 27 des Dekorteils 15 ein.

Im Hinblick auf eine einfache Drehbetätigung des Bajonettringelementes 14 ist in der umfangsseitigen Randwand 23 des Dekorteils 15 eine schlitzförmige Werkzeug-Zugangsöffnung 53 (Fig. 1 oder Fig. 2) ausgebildet. Die Werkzeug-Zugangsöffnung 53 ist radial nach innen in Flucht mit einem Werkzeugansatz 55 (zum Beispiel Fig. 8), der am Bajonettringelement 14 angeformt ist. Wie aus den Fig. 4 und 8 hervorgeht, schließen sich am Werkzeugansatz beidseitig jeweils in Umfangsrichtung Wandsegmente 57 an, die bis zu den stiftförmigen Anschlagelementen 49 geführt sind.

Das Bajonettringelement 14 ist aus einem im Vergleich zum Dekorteil 15 und zum Befestigungsteil 17 elastisch nachgiebigen Kunststoff-Weichmaterial hergestellt. Demgegenüber ist das Befestigungsteil 17 aus einer Kunststoff-Hartkomponente (zum Beispiel faserverstärkt) gefertigt.

### Bezugszeichenliste

- 1,3: Bedienelemente
- 5: Unterputz-Baugruppe
- 7,9: Durchführungsöffnungen
- 11: Rosette
- 13: Installationswand
- 14: Bajonettringelement
- 15: Dekorteil
- 17: Befestigungsteil
- 19: Befestigungsschrauben
- 21: Boden
- 23: Randsteg
- 25: Vormontageeinheit
- 27: Lagersteg
- 29: Gegenkontur
- 31: Bajonettverbindungen
- 33: Bajonettöffnung
- 35: querschnittsgroßer Teilbereich
- 37: querschnittskleiner Teilbereich
- 39: Bajonettzapfen
- 41: Zapfenkopf
- 43: Vorsprünge
- 45: Aussparungen
- 47: Anlaufschräge
- 49: Anschlagelemente
- 51: Freisparung
- 53: Werkzeug-Zugangsöffnung
- 55: Werkzeugansatz
- 57: Wandsegmente
- E: Entriegelungsstellung
- V: Verriegelungsstellung
- U: Umfangsrichtung
- α: Drehwinkel
- β: Winkel der Anlaufschräge 47
- D: Drehebene
- U: Umfangsrichtung

## Patentansprüche

1. Sanitärarmatur, insbesondere Unterputz-Sanitärarmatur, mit einer, eine Baugruppe (5) der Sanitärarmatur überdeckenden Rosette (11), die ein sichtseitiges Dekorteil (15) und ein vom Dekorteil (15) überdecktes Befestigungsteil (17) aufweist, das unter Zwischenlage einer Installationswand (13) mit der Baugruppe (5) verspannbar ist, wobei das Dekorteil (15) und das Befestigungsteil (17) in Bajonettverbindung (31) sind, bei der ein Riegelelement (14) in einer Betätigungsrichtung (U) entlang des Rosettenumfangs zwischen einer Verriegelungsstellung (V), in der das Dekorteil (15) am Befestigungsteil (17) montiert ist, und einer Entriegelungsstellung (E) verstellbar ist, in der das Dekorteil (15) vom Befestigungsteil (17) lösbar ist, wobei das Riegelelement (14) ein vom Dekorteil (15) und vom Befestigungsteil (17) separates Bajonettringelement ist, das sichtgeschützt zwischen dem Dekorteil (15) und dem Befestigungsteil (17) angeordnet, und das Bajonettringelement (14) mit Bezug auf die drehfesten Dekor- und Befestigungsteile (15, 17) zwischen seiner Ver- und Entriegelungsstellung (V, E) verstellbar ist
**dadurch gekennzeichnet, dass**
das Dekorteil (15) eine Verdrehsicherung aufweist, mittels der das Dekorteil (15) drehfest auf das Befestigungsteil (17) aufsteckbar ist.

2. Sanitärarmatur nach Anspruch 1, **dadurch gekennzeichnet, dass** das Bajonettringelement (14) und das Befestigungsteil (17) Bajonettverbindungspartner sind, von denen ein Verbindungspartner, insbesondere das Bajonettringelement (14), zumindest eine schlüssellochartige Bajonettöffnung (33) aufweist, die von einem Bajonettzapfen (39) des anderen Verbindungspartners, insbesondere des Befestigungselements (17), durchsetzbar ist, und dass in der Entriegelungsstellung (E) der Bajonettzapfen (39) mit seinem ausgeweiteten Zapfenkopf (41) durch einen querschnittsgroßen Teilbereich (35) der Bajonettöffnung (33) führbar ist und in einer Verriegelungsstellung (V) der Zapfenkopf (41) des Bajonettzapfens (39) den Öffnungsrand eines querschnittskleinen Teilbereiches (37) der Bajonettöffnung (33) übergreift.

3. Sanitärarmatur nach Anspruch 1 oder 2, **dadurch gekennzeichnet, dass** das Dekorteil (15) gegenüber dem Befestigungsteil (17) anbindungsfrei ist und unter Zwischenordnung des Bajonettringelements (14) am Befestigungsteil (17) gehaltert ist, und dass das Bajonettringelement (14) am Dekorteil (15) drehgelagert ist.

4. Sanitärarmatur nach Anspruch 3, **dadurch gekennzeichnet, dass** das Dekorteil (15) schalenförmig mit einem Boden (21) und einer davon hochgezogenen kreisförmig umlaufenden Randwand (23) ausgebildet ist, und dass die umlaufende Randwand (23) unter Bildung der Drehlagerung für das Bajonettringelement (14) zumindest einen radial nach innen abragenden Lagersteg (27) aufweist, der eine umfangsseitig am Bajonettringelement (14) ausgebildete Gegenkontur (29) umgreift.

5. Sanitärarmatur nach einem der Ansprüche 2 bis 4, **dadurch gekennzeichnet, dass** die Bajonettöffnung (33) in einer Anlaufschräge (47) des Bajonettringelements (14) ausgebildet ist, die mit Bezug auf eine Bajonettringelement-Drehebene (D) mit einem Anlaufwinkel (β) schräggestellt ist, und zwar derart, dass in der Entriegelungsstellung (E) der Zapfenkopf (41) des am Befestigungsteil (17) angeformten Bajonettzapfens (39) den Öffnungsrand der Bajonettöffnung (33) um eine lichte Höhe (Δh) überragt, und dass beim Verstellen in die Verriegelungsstellung (V) der Zapfenkopf (41) des Bajonettzapfens (39) unter Aufbrauch der lichten Höhe (Δh) in Anlage mit dem Öffnungsrandbereich der Bajonettöffnung (33) kommt, und zwar unter Aufbau einer Vorspannkraft (Fᵥ), mittels der das Bajonettringelement (14) gegen das Befestigungsteil (17) gezogen wird.

6. Sanitärarmatur nach einem der Ansprüche 1 bis 5, **dadurch gekennzeichnet, dass** das Bajonettringelement (14) einen Werkzeugansatz (55) aufweist, mit dem bei einem manuell vorgenommenen Werkzeugzugriff das Bajonettringelement (14) verstellbar ist, und dass das Dekorteil (15) eine Werkzeug-Zugangsöffnung (53) aufweist, die radial nach außen in Flucht mit dem Werkzeugansatz (55) angeordnet ist.

7. Sanitärarmatur nach einem der Ansprüche 1 bis 6, **dadurch gekennzeichnet, dass** das Bajonettringelement (14) aus einem im Vergleich zum Dekorteil (15) und zum Befestigungsteil (17) elastisch nachgiebigen Material hergestellt ist, und/oder dass das Bajonettringelement (14) und das Dekorteil (15) zu einer Vormontageeinheit (25) zusammenfügbar ist.

8. Sanitärarmatur nach einem der Ansprüche 6 oder 7, **dadurch gekennzeichnet, dass** das Bajonettringelement (14) Anschlagelemente (49) aufweist, die bei Erreichen der Ver- oder Entriegelungsstellung (V, E) eine Drehbetätigung des Bajonettringelements (14) begrenzen, und dass die Anschlagelemente (49) elastisch nachgiebig ausgebildet sind und bei Erreichen der Ver- oder Entriegelungsstellung (V, E) in eine Freisparung (51) im Dekorteil (15) einrasten.

## Claims

1. Sanitary fitting, especially a concealed sanitary fitting, having a rosette (11) which covers an assembly (5) of the sanitary fitting and which has a decorative part (15) on the visible side and a fixing part (17) covered by the decorative part (15), which fixing part is arranged to be clamped together with the assembly (5) with interposition of an installation wall (13), wherein the decorative part (15) and the fixing part (17) are in bayonet connection (31), in which a locking element (14) is displaceable in an actuation direction (U) along the circumference of the rosette between a locking position (V), in which the decorative part (15) is mounted on the fixing part (17), and an unlocking position (E), in which the decorative part (15) is releasable from the fixing part (17), wherein the locking element (14) is a bayonet ring element separate from the decorative part (15) and from the fixing part (17), which bayonet ring element is arranged so as to be concealed from view between the decorative part (15) and the fixing part (17), and the bayonet ring element (14) is displaceable with respect to the decorative and fixing parts (15, 17), which are fixed against relative rotation, between its locking and unlocking positions (V, E),
**characterised in that**
the decorative part (15) has anti-rotation means, by means of which the decorative part (15) is mountable on the fixing part (17) so as to be fixed against relative rotation.

2. Sanitary fitting according to claim 1, **characterised in that** the bayonet ring element (14) and the fixing part (17) are bayonet connection partners, of which one connection partner, especially the bayonet ring element (14), has at least one keyhole-like bayonet opening (33) through which a bayonet pin (39) of the other connection partner, especially the fixing element (17), is able to pass, and in the unlocking position (E) the widened head (41) of the bayonet pin (39) is able to pass through a sub-region (35) of the bayonet opening (33) having a large cross-section and, in a locking position (V), the head (41) of the bayonet pin (39) engages over the rim of the opening of a sub-region (37) of the bayonet opening (33) having a small cross-section.

3. Sanitary fitting according to claim 1 or 2, **characterised in that** the decorative part (15) is free of connections in respect of the fixing part (17) and is retained on the fixing part (17) with interposition of the bayonet ring element (14), and the bayonet ring element (14) is rotatably mounted on the decorative part (15).

4. Sanitary fitting according to claim 3, **characterised in that** the decorative part (15) is dish-shaped with a base (21) and a circular circumferential rim wall (23) extending upwards therefrom, and the circumferential rim wall (23) has at least one radially inwardly projecting bearing rib (27), forming the rotary bearing for the bayonet ring element (14), which bearing rib engages around a mating contour (29) formed on the circumference of the bayonet ring element (14).

5. Sanitary fitting according to any one of claims 2 to 4, **characterised in that** the bayonet opening (33) is formed in a run-up slope (47) of the bayonet ring element (14), which slope is inclined at a run-up angle (β) with respect to a rotational plane (D) of the bayonet ring element in such a way that, in the unlocking position (E), the head (41) of the bayonet pin (39) formed on the fixing part (17) projects over the rim of the bayonet opening (33) by a clear height (Δh) and, on displacement into the locking position (V), the head (41) of the bayonet pin (39) comes into contact with the rim region of the bayonet opening (33), fully occupying the clear height (Δh), and establishing a preload force (Fv) by means of which the bayonet ring element (14) is drawn against the fixing part (17).

6. Sanitary fitting according to any one of claims 1 to 5, **characterised in that** the bayonet ring element (14) has a tool application point (55) with which the bayonet ring element (14) is displaceable when acted upon manually by a tool, and the decorative part (15) has a tool access opening (53) which is arranged radially towards the outside in alignment with the tool application point (55).

7. Sanitary fitting according to any one of claims 1 to 6, **characterised in that** the bayonet ring element (14) is made from a material that is resiliently flexible in comparison with the decorative part (15) and the fixing part (17), and/or the bayonet ring element (14) and the decorative part (15) can be combined to form a pre-assembled unit (25).

8. Sanitary fitting according to either one of claims 6 and 7, **characterised in that** the bayonet ring element (14) has stop elements (49) which limit rotary actuation of the bayonet ring element (14) when the locking or unlocking position (V, E) is reached, and the stop elements (49) are resiliently flexible and snap into a recess (51) in the decorative part (15) when the locking or unlocking position (V, E) is reached.

## Revendications

1. Robinetterie sanitaire, en particulier robinetterie sanitaire encastrable comportant une rosette (11) recouvrant un module (5) la robinetterie sanitaire qui comporte une pièce décorative visible (15) et une pièce de fixation (17) recouverte par la pièce décorative (15), qui peut être serrée avec le module (5) avec interposition d'une paroi d'installation (13), la pièce décorative (15) et la pièce de fixation (17) étant reliée par une liaison à baïonnette (31) dans laquelle un élément de verrouillage (14) peut être déplacé dans une direction d'actionnement (U) le long la périphérie de la rosette, entre une position de verrouillage (V), dans laquelle la pièce décorative (15) est montée sur la pièce de fixation (17) et une position de déverrouillage (E) dans laquelle la pièce décorative (15) peut être séparée de la pièce de fixation (17),
l'élément de verrouillage (14) étant un élément de bague à baïonnette distinct de la pièce décorative (15) et de la pièce de fixation (17) qui est monté sans être visible entre la pièce décorative (15) et la pièce de fixation, et l'élément de bague à baïonnette (14) pouvant être déplacé par rapport à la pièce décorative et à la pièce de fixation (15, 17) fixes, en rotation entre sa position de verrouillage et sa position de déverrouillage (V, E),
**caractérisée en ce que**
la pièce décorative (15) comporte une protection anti-rotation au moyen de laquelle elle peut être enfichée solidairement en rotation sur la pièce de fixation (17).

2. Robinetterie sanitaire conforme à la revendication 1,
**caractérisée en ce que**
l'élément de bague à baïonnette (14) et la pièce de fixation (17) sont des partenaires de liaison à baïonnette, dont un partenaire de liaison, en particulier l'élément de bague à baïonnette (14) comporte au moins une ouverture de baïonnette (33) de type trou de serrure qui peut être traversé par un tourillon de baïonnette (39) de l'autre partenaire de liaison, en particulier l'élément de fixation (17), et dans la position de déverrouillage (E) le tourillon de baïonnette (39) peut être transféré par sa tête de tourillon élargie (41) au travers d'une zone partielle (35) de grande section transversale de l'ouverture de baïonnette (33), et dans la position de verrouillage (V) la tête (41) du tourillon de baïonnette (39) vient en prise sur le bord de l'ouverture d'une zone partielle (37) de petite section transversale de l'ouverture de baïonnette (33).

3. Robinetterie sanitaire conforme à la revendication 1 ou 2, **caractérisée en ce que**
la pièce décorative (15) est exempte de liaison avec la pièce de fixation (17), et est maintenue sur la pièce de fixation (17) par interposition de l'élément de bague à baïonnette (14), et l'élément de bague à baïonnette (14) est monté rotatif sur la pièce décorative (15).

4. Robinetterie sanitaire conforme à la revendication 3,
**caractérisée en ce que**
la pièce décorative (15) à la forme d'une coque ayant un fond (21) et une paroi de bord circulaire périphérique (23) dépassant de celui-ci, et la paroi de bord périphérique (23) comporte au moins une barrette de support (27) s'étendant radialement vers l'intérieur en formant le palier rotatif pour l'élément de bague à baïonnette (14), et venant en prise autour d'un contour antagonisme (29) formé sur la périphérie de l'élément de bague à baïonnette (14).

5. Robinetterie sanitaire conforme à l'une des revendications 2 à 4, **caractérisée en ce que**
l'ouverture de baïonnette (33) est formée dans un biseau d'introduction (47) de l'élément de bague à baïonnette (14), qui est conformé en biais avec un angle d'entrée (β) par rapport au plan de rotation (D) de l'élément de bague à baïonnette, et ce de sorte que dans la position de déverrouillage (E) la tête (41) du tourillon de baïonnette (39) formé sur la pièce de fixation (17) dépasse du bord de l'ouverture de baïonnette (33) d'une faible hauteur (Δh), et que lors du déplacement dans la position de verrouillage (V), la tête (41) du tourillon de baïonnette (32) vienne en appui sur la zone de bord de l'ouverture de baïonnette (33) en utilisant la faible hauteur (Δh), ce en établissant une force de précontrainte (Fv) au moyen de laquelle l'élément de bague à baïonnette (14) est tiré contre la pièce de fixation (17).

6. Robinetterie sanitaire conforme à l'une des revendications 1 à 5, **caractérisée en ce que**
l'élément de bague à baïonnette (14) comporte un embout d'outil (55) avec lequel, lors d'une mise en prise manuelle d'un outil, l'élément de bague à de baïonnette (14) peut être déplacé, et la pièce décorative (15) comporte une ouverture d'accès d'outil (53) qui est située radialement vers l'extérieur à fleur de l'embout d'outil (55).

7. Robinetterie sanitaire conforme à l'une des revendications 1 à 6, **caractérisée en ce que**
l'élément de bague à baïonnette (14) est réalisé à partir d'un matériau élastiquement flexible en comparaison avec la pièce décorative (15) et la pièce de fixation (17), et/ou l'élément de bague à baïonnette (14) et la pièce décorative (15) peuvent être rassemblée en une unité de montage préalable (25).

8. Robinetterie sanitaire conforme à l'une des revendications 6 et 7, **caractérisée en ce que**
l'élément de bague à baïonnette (14) comporte des éléments de butée (49) qui, lorsqu'à été atteinte, la position de verrouillage ou de déverrouillage (V, E) limitent la rotation de l'élément de bague à baïonnette (14), et les éléments de butée (49) sont élastiquement flexibles, et s'encliquètent dans un évidement (51) de la pièce décorative (15) lorsqu'à été atteinte la position de verrouillage ou la position de déverrouillage (V, E).
